(19)

Europäisches
Patentamt
European
Patent Office
Office européen
des brevets

(11) **EP 4 760 813 A1**

(12) **EUROPEAN PATENT APPLICATION**
published in accordance with Art. 153(4) EPC

(43) Date of publication:
**17.06.2026 Bulletin 2026/25**

(21) Application number: **25852435.4**

(22) Date of filing: **06.08.2025**

(51) International Patent Classification (IPC):
*H01M 4/36* (2006.01)     *H01M 4/525* (2010.01)
*C01G 53/50* (2025.01)     *H01M 4/131* (2010.01)
*H01M 10/052* (2010.01)     *H01M 4/485* (2010.01)
*H01M 4/505* (2010.01)     *H01M 4/02* (2006.01)

(52) Cooperative Patent Classification (CPC):
**C01G 53/50; H01M 4/02; H01M 4/131; H01M 4/36;
H01M 4/485; H01M 4/505; H01M 4/525;
H01M 10/052;** Y02E 60/10

(86) International application number:
**PCT/KR2025/011828**

(87) International publication number:
**WO 2026/035030 (12.02.2026 Gazette 2026/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.08.2024   KR 20240104686
05.08.2025   KR 20250107390**

(71) Applicant: **LG Energy Solution, Ltd.
Seoul 07335 (KR)**

(72) Inventors:
• **KIM, Dong Hwi
  Daejeon 34122 (KR)**
• **PARK, Jinseo
  Daejeon 34122 (KR)**
• **YUN, Kyung Sun
  Daejeon 34122 (KR)**
• **RYU, Kihoon
  Daejeon 34122 (KR)**
• **JEON, Hyelim
  Daejeon 34122 (KR)**

(74) Representative: **Hoffmann Eitle
Patent- und Rechtsanwälte PartmbB
Arabellastraße 30
81925 München (DE)**

(54) **POSITIVE ELECTRODE ACTIVE MATERIAL FOR LITHIUM SECONDARY BATTERY, METHOD FOR PREPARING SAME, POSITIVE ELECTRODE AND LITHIUM SECONDARY BATTERY COMPRISING SAME**

(57)     According to an embodiment of the present disclosure, provided is a positive electrode active material for lithium secondary battery, comprising:
a lithium compound represented by the following Formula 1, and a carbon coating layer formed on the particle surface of the lithium compound,
wherein the lithium compound has the form of secondary particles having a structure in which primary particles are aggregated each other, the average diameter(D50) of the secondary particles is 0.2 to 10 $\mu$m, the average diameter(D50) of the primary particles is 10 to 300 nm, and the ratio of the average diameter(D90)/average diameter(D10) of the secondary particles is 15 to 80, a method for preparing the same, a positive electrode and a lithium secondary battery comprising the same:

[Formula 1]     $Li_{1+a}M1_bM2_cO_{2-d}X_d$

wherein, in Formula 1,
M1 is one or more selected from the group consisting of Ni, V, Mn, Mo, Cr, and Fe, and M2 is one or more selected from the group consisting of Ti, Zr, Nb, Mo, Ta, and W,
$0.1 \leq a \leq 0.5$, $0.2 \leq b \leq 0.6$, $0.2 \leq c \leq 0.6$, $1.05 \leq (1+a)/(b+c) \leq 1.5$, $0 \leq d \leq 0.2$, and

EP 4 760 813 A1

**(Cont. next page)**

X is a halogen element.

Description

**[TECHNICAL FIELD]**

Cross Citation with Related Application(s)

This application claims priority to and the benefit of Korean Patent Application No. 10-2024-0104686, filed on August 6, 2024, and Korean Patent Application No. 10-2025-0107390, filed on August 5, 2025, the disclosures of which are incorporated herein by reference in their entirety.

The present disclosure relate to a positive electrode active material for lithium secondary battery, a method for preparing the same, a positive electrode and a lithium secondary battery comprising the same.

**[BACKGROUND]**

Due to the rapid increase in the use of fossil fuels, the demand for the use of alternative energy or clean energy is increasing, and as a part thereof, the fields that are being studied most actively are the fields of power generation and power storage using electrochemistry.

Currently, a secondary battery is a representative example of an electrochemical device that utilizes such electrochemical energy, and the range of use thereof tends to be gradually expanding.

Recently, with the increase of the technological development and demand for mobile devices such as portable computers, portable phones, and cameras, demand for secondary batteries as an energy source rapidly increases. Among such secondary batteries, many studies have been conducted on a lithium secondary battery that exhibit high energy density and operating potential, have a long cycle life, and a low self-discharge rate, and has been commercialized and widely used.

In addition, as interest in environmental issues grows, studies are frequently conducted on an electric vehicle, a hybrid electric vehicle, etc. which can replace a vehicle using fossil fuels such as a gasoline vehicle and a diesel vehicle, which are one of the main causes of air pollution. Although a nickel metal hydride secondary battery is mainly used as a power source for the electric vehicle and the hybrid electric vehicle, numerous studies have been actively made to use a lithium secondary battery having a high energy density and a high discharge voltage, a part of which are in the commercializing stage.

A lithium secondary battery generally has a structure in which a non-aqueous electrolytic solution is impregnated into an electrode assembly including a positive electrode, a negative electrode and a porous separator. In general, the positive electrode is prepared by coating a positive electrode mixture including a positive electrode active material onto an aluminum foil, and the negative electrode is prepared by coating a negative electrode mixture including a negative electrode active material onto a copper foil.

Usually, the positive electrode active material is a lithium transition metal oxide, and the negative electrode active material is a carbon-based material.

However, recently, as lithium secondary batteries have been employed in various industrial fields, high-capacity and high-rate characteristics are being studied as important performance parameters, and consequently, attempts to develop a positive electrode active material capable of achieving such characteristics are being actively conducted.

One material that has recently been attracting attention as such a positive electrode active material is DRX (cation-disordered rock-salt transition metal oxide), which is a high-capacity material capable of exhibiting additional capacity through not only cation oxidation/reduction but also anion oxidation/reduction (oxygen redox).

However, such materials have problems such as gas emission during high-voltage operation of lithium secondary batteries, deterioration of lifetime characteristics due to an increase in material resistance, and improvement thereof remains a challenge.

Therefore, there is an urgent need to develop technologies that can solve these problems and achieve secondary battery performance such as high-capacity, high-rate, and excellent lifetime characteristics.

**[DETAILED DESCRIPTION OF THE INVENTION[]**

**[Technical Problem]**

It is an object of the present disclosure to provide a positive electrode active material for lithium secondary battery prepared so as to have an optimized particle size distribution, a method for preparing the same, a positive electrode and a lithium secondary battery comprising the same.

**[Technical Solution]**

According to an aspect of the present disclosure, there is provided a positive electrode active material for lithium secondary battery, comprising:

a lithium compound represented by the following Formula 1, and a carbon coating layer formed on the particle surface of the lithium compound,

wherein the lithium compound has the form of secondary particles having a structure in which primary particles are aggregated each other, with the average diameter(D50) of the secondary particles being 0.2 to 10 $\mu$m, the average diameter(D50) of the primary particles being 10 to 300 nm, and the ratio of the average diameter(D90)/average diameter(D10) of the secondary particles being 15 to 80:

$$[\text{Formula 1}] \qquad \text{Li}_{1+a}\text{M1}_b\text{M2}_c\text{O}_{2-d}\text{X}_d$$

wherein, in Formula 1,

M1 is one or more selected from the group consisting of Ni, V, Mn, Mo, Cr, and Fe, and M2 is one or more selected from the group consisting of Ti, Zr, Nb, Mo, Ta, and W,

$0.1 \leq a \leq 0.5$, $0.2 \leq b \leq 0.6$, $0.2 \leq c \leq 0.6$, $1.05 \leq (1+a)/(b+c) \leq 1.5$, $0 \leq d \leq 0.2$, and

X is a halogen element.

Specifically, $b+c=0.8$ in Formula 1.

The carbon coating layer may be included in an amount of 1 to 10 parts by weight based on 100 parts by weight of the lithium compound.

Meanwhile, according to another aspect of the present disclosure, there is provided a method for manufacturing a positive electrode active material for lithium secondary battery, the method comprising:

synthesizing the lithium compound based on a mixture containing an active material precursor and a carbon precursor,

wherein the synthesis comprises primary ball-milling, baking, secondary ball-milling, and jaw crushing.

Specifically, the synthesis may be performed, for example, in the order of primary ball-milling, baking, jaw crushing and secondary ball-milling, or may be performed in the order of primary ball-milling, baking, secondary ball-milling and jaw crushing.

Here, the ball-milling may be performed under an inert atmosphere, and the primary ball-milling may be performed at 100 rpm to 500 rpm, and the second ball-milling is performed at 100 rpm to 500 rpm. The primary ball-milling may be repeatedly performed 1 to 2 times by a process of milling for 3 to 8 hours and then resting for 5 to 120 minutes, and the secondary ball milling may be repeatedly performed 1 to 2 times by a process of milling for 1 to 8 hours and then resting for 5 to 120 minutes.

Further, the jaw crushing may be performed once or twice.

The jaw crushing may be performed at 600 rpm to 1200 rpm.

The baking may be performed under an inert atmosphere at a temperature ranging from 650 to 1200°C for 6 to 30 hours.

The active material precursor may be an M1 source, an M2 source, and a lithium source, and the carbon precursor may be one or more selected from the group consisting of citric acid and sucrose.

According to another aspect of the present disclosure, there is provided a positive electrode for lithium secondary battery, having a positive electrode mixture layer formed on one surface or both surfaces of the entire positive electrode, wherein the positive electrode mixture layer comprises the positive electrode active material, a binder, and a conductive material.

In this case, the conductive material may be a dot-type conductive material.

Meanwhile, according to yet another aspect of the present disclosure, there is provided a lithium secondary battery comprising the positive electrode.

**[DETAILED DESCRIPTION OF THE EMBODIMENTS]**

Hereinafter, terms or words used in the present specification and claims should not be construed as being limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

Unless defined otherwise, all terms (including technical and scientific terms) used herein may be used as meanings that can be commonly understood by those of ordinary skill in the art to which the present disclosure belongs. In addition, terms defined in a commonly used dictionary are not interpreted ideally or excessively unless specifically explicitly defined.

The terms used herein are provided to describe the embodiments but not to limit the inventive concept. In the specification, the singular forms include plural forms unless the context clearly indicates otherwise. The terms "comprises" and/or "comprising" as used herein does not exclude the existence or the addition of one or more elements other than those mentioned.

Meanwhile, the terms "consists of" and/or "consisting of' as used herein mean that in addition to the recited components, other components are covered only to the extent that they are included in very small amounts at the impurity level and are not included in more than trace amounts.

In this specification, "average particle diameter D10, D50, and D90" refer to particle sizes at 10%, 50%, and 90% in the cumulative distribution of volume of the particle powder to be measured (e.g., positive electrode active material powder, negative electrode active material powder, etc.). The average particle diameters D10, D50, and D90 can be measured by using the laser diffraction method. For example, the average particle diameters can be measured by a process which includes dispersing the particle powder to be measured in a dispersion medium, introducing it into a commercially available laser diffraction particle size analyzer (e.g., Microtrac MT 3000), performing irradiation with ultrasonic waves at a frequency of about 28kHz and an output of 60W, obtaining a volume-cumulative particle size distribution graph, and then determining a particle size corresponding to a cumulative volume of 10%, 50% and 90%.

## Positive electrode active material

According to an embodiment of the present disclosure, there is provided a positive electrode active material for lithium secondary battery, comprising:

a lithium compound represented by the following Formula 1, and a carbon coating layer formed on the particle surface of the lithium compound,
wherein the lithium compound has the form of secondary particles having a structure in which primary particles are aggregated each other, with the average diameter(D50) of the secondary particles being 0.2 to 10 $\mu$m, the average diameter(D50) of the primary particles being 10 to 300 nm, and the ratio of the average diameter(D90)/average diameter(D10) of the secondary particles being 15 to 80:

[Formula 1] $\qquad$ $Li_{1+a}M1_bM2_cO_{2-d}X_d$

wherein, in Formula 1,
M1 is one or more selected from the group consisting of Ni, V, Mn, Mo, Cr, and Fe, and M2 is one or more selected from the group consisting of Ti, Zr, Nb, Mo, Ta, and W,
$0.1 \leq a \leq 0.5$, $0.2 \leq b \leq 0.6$, $0.2 \leq c \leq 0.6$, $1.05 \leq (1+a)/(b+c) \leq 1.5$, $0 \leq d \leq 0.2$, and
X is a halogen element.

Here, the lithium compound represented by Formula 1 may be DRX, and more specifically, $b+c=0.8$ in Formula 1.

In addition, $0.2 \leq a \leq 0.4$, $0.3 \leq b \leq 0.5$, and $0.3 \leq c \leq 0.5$, and M1 may be Mn, M2 may be Ti.

Most specifically, the lithium compound may be $Li_{1.2}Mn_{0.4}Ti_{0.4}O_2$.

This lithium compound may have the form of secondary particles having a structure in which primary particles are aggregated each other.

Here, the average diameter (D50) of the secondary particles may be 0.2 to 10 micrometers, specifically 0.5 to 7 micrometers, and more specifically 0.7 to 2 micrometers.

Additionally, the average diameter (D50) of the primary particles constituting the secondary particles may be 10 to 300 nanometers, specifically 20 to 200 nanometers, and more specifically 30 to 100 nanometers.

If the average diameter (D50) of the secondary particles is too large and falls outside the above range, the lithium ion migration path becomes larger, resulting in inferior capacity and output, and the ability to cover particles during carbon coating is reduced. Conversely, if the average diameter of the secondary particles is too small, the particles may be aggregated each other, causing clumping phenomena during contact with conductive materials and slurry mixing, which can adversely affect output and lifetime characteristics.

Furthermore, if the average diameter(D50) of the primary particles is too large, the aggregating properties of the secondary particles may be deteriorated, and if the average diameter(D50) of the primary particles is too small, the amount of fine powder generated may increase, which is not preferable.

Meanwhile, according to the present disclosure, as the lithium compound of the present disclosure is prepared by the preparation method described below, the lithium compound can have an optimized particle size distribution that eliminates agglomeration phenomenon, optimizes the covering power of the carbon coating, and improves rolling density, and as an index indicated thereby, the average diameter (D90) / average diameter (D10) of the secondary particles may be 15 to 80, specifically 15 to 70, and more specifically 20 to 70.

If the average diameter (D90)/average diameter (D10) of the secondary particles is larger and falls outside the above range, the lithium compound has too wide a range, resulting in deteriorated capacity and resistance performance, and it is very difficult to prepare secondary particles with an average diameter (D90)/average diameter (D10) ratio larger than the above range.

The lithium compound is used in a form in which carbon coating is performed on its surface to enhance conductivity, and the carbon coating layer may be included in an amount of 1 to 10 parts by weight based on 100 parts by weight of the lithium compound. The carbon coating layer may be included, specifically, in an amount of 1 to 7 parts by weight, and more specifically in an amount of 1 to 5 parts by weight, based on 100 parts by weight of the lithium compound.

If the content of the carbon coating layer is too small and falls outside the above range, a sufficient conductive network cannot be formed, which is not preferable. If the content of the carbon coating layer is too high, there is a problem that agglomeration occurs due to the phenomenon of these clustering together, which makes it impossible to achieve a uniform coating.

Meanwhile, the positive electrode active material may, in addition to the lithium compound, further include a compound capable of reversible intercalation and deintercalation of lithium, and examples thereof may include lithium metal oxide containing lithium and at least one metal such as cobalt, manganese, nickel or aluminum, specifically, lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $Li_{1+x'}Ni_{1-Y}Mn_YO_2$ (where $-0.5 \leq x' \leq 0.5$, $0 < Y < 1$), $Li_{1+x''}Mn_{2-Z}Ni_ZO_4$ (where $-0.5 \leq x'' \leq 0.5$, and $0 < Z < 2$), etc.), lithium-nickel-cobalt-based oxide (e.g., $Li_{1+x'''}Ni_{1-Y1}Co_{Y1}O_2$ (where $-0.5 \leq x''' \leq 0.5$, and $0 < Y1 < 1$), etc.), lithium-manganese-cobalt-based oxide (e.g., $Li_{1+x''''}Co_{1-Y2}Mn_{Y2}O_2$ (where $-0.5 \leq x'''' \leq 0.5$, and $0 < Y2 < 1$), $Li_{1+x'''''}Mn_{2-Z1}Co_{Z1}O_4$ (where $-0.5 \leq x''''' \leq 0.5$, and $0 < Z1 < 2$), etc.), lithium-nickel-manganese-cobalt-based oxide (e.g., $Li_{1+a1}(Ni_pCo_qMn_r)O_2$ (where $-0.5 \leq a1 \leq 0.5$, $0 < p < 1$, $0 < q < 1$, $0 < r < 1$, and $p+q+r=1$) or $Li_{1+a2}(Ni_{p1}Co_{q1}Mn_{r1})O_4$ (where $-0.5 \leq a2 \leq 0.5$, $0 < p1 < 2$, $0 < q1 < 2$, $0 < r1 < 2$, and $p1+q1+r1=2$), etc.), or lithium-nickel-cobalt-transition metal(M) oxide (e.g., $Li_{1+a3}(Ni_{p2}Co_{q2}Mn_{r2}M_{s2})O_2$ (where M is selected from the group consisting of Al, Fe, V, Cr, Ti, Ta, Mg and Mo, and , a3, p2, q2, r2 and s2 are atomic fractions of each independent elements, wherein $-0.5 \leq a3 \leq 0.5$, $0 < p2 < 1$, $0 < q2 < 1$, $0 < r2 < 1$, $0 < s2 < 1$, and $p2+q2+r2+s2=1$), etc.), lithium iron phosphate oxide (e.g., $Li_{1+a4}Fe_{1-p3}M_{p3}(PO_{4-b4})X_{b4}$ (where M is at least one selected from Al, Mg, and Ti, X is at least one selected from F, S and N, $-0.5 \leq a4 \leq 0.5$, $0 \leq p3 \leq 0.5$, $0 \leq b4 \leq 0.1$)), or the like, and any one thereof or a mixture of two or more thereof may be used.

Of course, the lithium compound according to the present disclosure may be included as a main active material, and based on the total amount of the positive electrode active material, the lithium compound according to the present disclosure may be included in an amount of 80% by weight or more, specifically 90% by weight or more and 100% by weight or less. The lithium compound alone can be included in an amount of 100% by weight.

## Method for preparing positive electrode active material

The method for preparing a positive electrode active material for lithium secondary battery includes preparing the lithium compound.

The method for preparing a lithium compound as the positive electrode active material is not limited, and it can be prepared by a solid-phase method, but specifically, it can be prepared by milling and baking a mixture containing an active material precursor and a carbon precursor.

In this case, the mixture may further include additives, such as a surface modifier, as needed.

Here, the active material precursor is a component constituting the lithium compound represented by Formula 1, and may be an M1 source, an M2 source, and a lithium source. In this case, the definitions of M1 and M2 are as defined for the positive electrode active material.

In this case, the lithium source may be one or more materials selected from lithium carbonate, lithium hydroxide, and lithium phosphate, and more specifically, lithium hydroxide (LiOH).

The M1 source may be one or more materials selected from sulfuric acid, nitric acid, carbonic acid, acetate, hydrochloric acid, hydroxide, oxide, and phosphoric acid, each containing M1, and more specifically, an oxide containing M1.

The M2 source may be one or more materials selected from sulfuric acid, nitric acid, carbonic acid, acetate, hydrochloric acid, hydroxide, oxide, and phosphoric acid, each containing M2, and more specifically, an oxide containing M2.

Further, in order to enhance the conductivity of the lithium compound synthesized, the carbon precursor is introduced together from the synthesis stage of the lithium compound.

In this case, the carbon precursor may be one or more materials selected from citric acid, glucose, sucrose, graphite, carbon nanotubes, and carbon black, and more specifically, it may be one or more selected from the group consisting of citric acid and sucrose.

Such precursors can typically be prepared using a solid-phase method involving mixing and then baking. However, when prepared by conventional methods, the lithium compound after completion of baking has a wide distribution of diameters, making it difficult to achieve the improved capacity and electrochemical performance intended by the present disclosure.

Therefore, according to the present disclosure, the precursor may be synthesized by performing a further milling step even after the mixing and baking.

In this case, the precursors may be mixed by primary ball-milling. The primary ball-milling may be performed, specifically, by dry mixing, and more specifically, by mixing the precursors with zirconia balls or the like and milling the mixture.

In this case, the primary ball-milling may be performed under an inert atmosphere, and specifically, it may be performed under an Ar atmosphere, and may be repeatedly performed 1 to 2 times by a process of milling at 100 to 500 rpm for 3 to 8 hours and then resting for 5 to 120 minutes.

Subsequently, when sufficient mixing is performed, the mixture can be baked.

In this case, the baking may be performed at a temperature ranging from 650 to 1200°C for 6 to 30 hours under an inert atmosphere, specifically, under an Ar atmosphere. Alternatively, the baking may be performed in two steps. For example, the first step may be performed at a temperature ranging from 500 to 800°C for 1 to 6 hours under an inert atmosphere, and the second step may be performed at a temperature ranging from 800 to 1200°C for 6 to 20 hours under an inert atmosphere.

Subsequently, by performing further milling according to the present disclosure, it is possible to control and optimize the particle size distribution. In this case, the further milling may be performed by secondary ball milling and jaw crushing. For example, the milling may be performed in the order of primary ball milling and baking, after jaw crushing and secondary ball milling described above. As another example, the milling may also be performed in the order of primary ball milling and baking, after secondary ball milling and jaw crushing.

Here, the secondary ball milling may be performed by dry mixing, similar to the primary ball milling. More specifically, it can be performed by mixing and milling the precursors with zirconia balls or the like.

Further, the secondary ball milling may also be performed in an inert atmosphere, specifically, under an Ar atmosphere.

Moreover, the secondary ball milling may be repeatedly performed 1 to 2 times by the process of milling at 100rpm to 500rpm for 1 to 8 hours and then resting for 5 to 120 minutes.

Milling at a speed that is too high or for a long period of time outside the above range is undesirable, because it not only lengthens the preparation process time and reduces process efficiency, but also can cause cracking of the baked lithium compound due to the high speed, and milling at a speed that is too low or for a short period of time is undesirable, because it is not able to achieve the particle size distribution intended by the present disclosure.

Meanwhile, the jaw crushing may be performed once, but may also be repeated two or more times. Specifically, it can be performed once to five times, and more specifically, it can be performed once to twice.

This jaw crushing may be performed at 600 to 1200 rpm, with a blade-to-blade spacing of 2 to 30 mm.

When such secondary ball milling and jaw crushing are performed, the particle size of the lithium compound can have the particle size distribution intended by the present disclosure.

Specifically, as described above, the average diameter (D50) of the secondary particles of the lithium compound may be 0.2 to 10 $\mu$m, the average diameter (D50) of the primary particles can be 10 to 300 nm, and the ratio of the average diameter (D90)/average diameter (D10) of the secondary particles may be 15 to 80.

When a lithium compound with an optimized particle size distribution is prepared by the above method, it is possible to improve electrochemical performance while minimizing particle aggregation.


**Positive electrode**


According to a further aspect of the present disclosure, a positive electrode can be manufactured by applying a positive electrode slurry containing the positive electrode active material onto a positive electrode current collector, followed by drying and rolling. Therefore, the positive electrode can have a structure in which a positive electrode mixture layer formed by drying the positive electrode slurry is formed on one surface or both surfaces of the positive electrode current collector.

The positive electrode current collector is not particularly limited so long as it does not cause chemical changes in the corresponding battery and has conductivity, and for example, stainless steel, aluminum, nickel, titanium, baked carbon, copper or stainless steel whose surface is treated with carbon, nickel, titanium, silver, or the like may be used.

The positive electrode current collector may typically have a thickness of 3 $\mu$m to 500 $\mu$m. The positive electrode current collector may have fine protrusions and depressions formed on the surface thereof to enhance the bonding force of the positive electrode active material. For example, the positive electrode current collector may be used in various forms such as a film, a sheet, a foil, a net, a porous body, a foaming body, and a nonwoven fabric structure.

The positive electrode mixture layer may, in addition to the positive electrode active material, further include a conductive material, a binder, and other additives as needed.

The conductive material is a component for further improving the conductivity of the positive electrode active material. Such a conductive material is not particularly limited as long as it has conductivity without causing any chemical change in the corresponding battery, and, for example, carbon powder such as carbon black, acetylene black, ketjen black, channel black, furnace black, lamp black, or thermal black; graphite powder such as natural graphite with a well-developed crystal structure, artificial graphite, or graphite; conductive fibers such as carbon nanotubes, carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives.

Specifically, the conductive material may be a dot-type conductive material, such as carbon black or furnace black, and more specifically, super-P carbon black.

The conductive material may be included in an amount of 0.1 to 20% by weight, specifically 0.5 to 10% by weight, or more specifically 0.5 to 5% by weight, based on the total weight of the positive electrode mixture layer.

The binder is a component that assists in the binding between the conductive material, the positive electrode active material, and the positive electrode current collector. Examples of such a binder include polyvinylidene fluoride(PVDF), polyvinyl alcohol, carboxymethyl cellulose(CMC), starch, hydroxypropyl cellulose, regenerated cellulose, polyvinylpyrrolidone, polyethylene, polypropylene, an ethylene-propylene-diene monomer, a sulfonated ethylene-propylene-diene monomer, styrene-butadiene rubber, fluororubber, various copolymers thereof, and the like.

Typically, the binder may be included in an amount of 0.5 to 20% by weight, specifically 0.5 to 10% by weight, and more specifically 0.5 to 5% by weight, based on the total weight of the positive electrode mixture layer.

Additionally, as other additives, for example, a filler or the like as a component for inhibiting the expansion may be further included. The filler is not particularly limited as long as it can inhibit the expansion of the electrode without causing any chemical change in the corresponding battery, and examples thereof may include olefinic polymers such as polyethylene and polypropylene; fibrous materials such as glass fibers and carbon fibers, and the like.

## Lithium secondary battery

Meanwhile, according to another aspect of the present disclosure, a lithium secondary battery comprising the positive electrode is provided.

The lithium secondary battery has a structure in which an electrode assembly including the positive electrode, the negative electrode, and a separator are incorporated into a secondary battery case together with an electrolyte.

Here, the negative electrode has a structure in which a negative electrode mixture layer containing a negative electrode active material is formed on one surface or both surfaces of a negative electrode current collector. In addition to the negative electrode active material, the negative electrode mixture layer may further include electrode materials such as a conductive material and a binder as described for the positive electrode.

The negative electrode current collector is not particularly limited so long as it does not cause chemical changes in the corresponding battery and has conductivity, and for example, copper, stainless steel, aluminum, nickel, titanium, baked carbon, copper or stainless steel whose surface is treated with carbon, nickel, titanium, silver, or the like, an aluminum-cadmium alloy, or the like may be used.

The negative electrode current collector may typically have a thickness of 3 $\mu$m to 500 $\mu$m. Similarly to the positive electrode current collector, the negative electrode current collector may have fine protrusions and depressions formed on the surface thereof to enhance the bonding force of the negative electrode active material. For example, the negative electrode current collector may be used in various forms such as a film, a sheet, a foil, a net, a porous body, a foaming body, and a nonwoven fabric structure.

The negative electrode active material may include a lithium metal, a carbon material capable of reversibly intercalating/deintercalating lithium ions, metals or alloys of lithium and these metals, a metal composite oxide, a material capable of doping and de-doping lithium, and a transition metal oxide.

The carbon material capable of reversibly intercalating/deintercalating lithium ions may be used without particular limitation so long as it is a carbon-based negative electrode active material generally used in a lithium ion secondary battery, and, as a typical example thereof, crystalline carbon, amorphous carbon, or both thereof may be used. Examples of the crystalline carbon may be graphite such as amorphous, planar, flaky, spherical, or fibrous natural graphite or artificial graphite, and examples of the amorphous carbon may be soft carbon (low-temperature baked carbon) or hard carbon, mesophase pitch carbide, baked cokes, and the like.

As the metals or alloys of lithium and these metals, metals selected from the group consisting of Cu, Ni, Na, K, Rb, Cs, Fr, Be, Mg, Ca, Sr, Si, Sb, Pb, In, Zn, Ba, Ra, Ge, Al and Sn or alloys of lithium and these metals may be used.

As the metal composite oxide, at least one selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$ (where $0 \leq x \leq 1$), $Li_xWO_2$ (where $0 \leq x \leq 1$) and $Sn_xMe_{1-x}Me'_yO_z$ (where Me: Mn, Fe, Pb, Ge; Me': Al, B, P, Si, Group I, II and III elements of the periodic table, halogen; $0<x\leq1$; $1\leq y\leq3$; $1\leq z\leq8$) may be used.

The material which may be doped and undoped with lithium may include Si, $SiO_x$ (where $0<x \leq 2$), Si-Y alloy (wherein Y is an element selected from the group consisting of an alkali metal, an alkaline earth metal, a Group 13 element, a Group 14 element, a transition metal, a rare earth element, and a combination thereof, and is not Si), Sn, $SnO_2$, Sn-Y (wherein Y is an element selected from the group consisting of an alkali metal, an alkaline earth metal, a Group 13 element, a Group 14 element, a transition metal, a rare earth element, and a combination thereof, and is not Sn), or the like., and at least one of these may be mixed and used with $SiO_2$. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include a lithium-containing titanium composite oxide (LTO), vanadium oxide, lithium vanadium oxide, and the like.

The negative electrode active material may be included in an amount of 60 to 99% by weight, preferably 80 to 99% by weight, and more preferably 90 to 98% by weight, based on the total weight of the negative electrode mixture layer.

When the metal itself is used without forming a negative electrode mixture layer on the negative electrode, it can be prepared by a method of physically joining, rolling, or depositing a metal on the metal thin film itself or the negative electrode current collector. As the deposition method, an electrical deposition method or a chemical vapor deposition method of the metal may be used.

For example, the metal thin film itself or the metal joined/rolled/deposited on the negative electrode current collector may include one type of metal selected from the group consisting of lithium(Li), nickel(Ni), tin(Sn), copper(Cu), and indium(In), or an alloy of two types thereof.

The separator can be used without particular limitation as long as it is commonly used as a separator in a lithium secondary battery, and those having an excellent electrolyte liquid moisture-containing ability while having low resistance against ion migration of the electrolyte liquid are particularly preferred.

For example, as the separator, a porous polymer film including a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof may be used. Further, a typical porous nonwoven fabric, for example, a nonwoven fabric made of a glass fiber having a high melting point, a polyethylene terephthalate fiber or the like can be used as the separator.

Alternatively, it may be an SRS (Safety Reinforced Separator) separator having a structure in which a coating layer containing a binding material and inorganic particles is formed on one surface or both surfaces of the polymer substrate as described above.

The inorganic particles enable formation of empty spaces between inorganic particles and thus play role of a spacer that forms micropores and keeps a physical shape as well. Because the inorganic particles generally have a characteristic that does not change physical properties even at a temperature as high as 200°C or above, the formed organic/inorganic mixture layer has excellent thermal resistance.

The inorganic particles are not particularly limited as long as they are stable electrochemically. That is, the inorganic particles that can be used in the present disclosure is not particularly limited if an oxidization and/or a reduction reaction does not occur in an operating voltage range of a battery in use. In particular, when the inorganic particles having an ion transfer ability are used, it is possible to increase the ion conductivity and facilitate performance enhancement within the electrochemical device, and thus, if possible, those having higher ionic conductivity are preferred. Further, when the inorganic particles have a high density, not only is it difficult to disperse during manufacturing, but also there are problems with weight increase during secondary battery manufacturing, and therefore, if possible, the inorganic particles with a lower density may be preferred. Further, the inorganic particles having a high dielectric constant may contribute to increasing the dissociation degree of the electrolyte salt, such as lithium salt, in the liquid electrolyte, thereby enhancing the ionic conductivity of the electrolyte. Finally, inorganic particles having thermal conductivity have excellent heat absorption ability, and thus, heat is locally concentrated to form heat generating points, thereby suppressing phenomena that lead to thermal runaway, which is more preferable.

For the foregoing reasons, the inorganic particles may be preferably at least one type selected from the group consisting of (a) inorganic particles having a high dielectric constant, of which the dielectric constant is 1 or more, 5 or more, preferably 10 or more, (b) inorganic particles having piezoelectricity, (c) thermally conductive inorganic particles and (d) inorganic particles having lithium ion transferring capability.

The piezoelectric inorganic particles refer to a material which is nonconducting under a normal pressure, but exhibits electrically conducting property due to changes of internal structure when a certain pressure is applied thereto. It is a material that has not only a high dielectric constant characteristic such as a dielectric constant of 100 or more, but also a function of generating electric potential between both side surfaces when one surface is charged positive and the opposite surface is charged negative with charges generated when the piezoelectric material is tensioned or compressed by a certain pressure exerted thereto.

Examples of the inorganic particles having piezoelectricity may include $BaTiO_3$, $Pb(Zr,Ti)O_3$ (PZT), $Pb_{1-x}La_xZr_{1-y}Ti_yO_3$ (PLZT), $PB(Mg_{1/3}Nb_{2/3})O_3\text{-}PbTiO_3$ (PMN-PT) hafnia $(H_fO_2)$ or a mixture thereof, but not limited hereto.

The inorganic particles having lithium ion transferring capability refer to inorganic particles that contain lithium atoms and have a function of moving a lithium ion without storing the lithium. The inorganic particles having lithium ion transferring capability may transfer and move lithium ions due to a kind of defect existing in the particle structure, so it is possible to prevent a decrease in lithium mobility and thus prevent a decrease in battery capacity.

Examples of the inorganic particles having lithium ion transferring capability may include lithium phosphate($Li_3PO_4$), lithium titanium phosphate($Li_xTi_y(PO_4)_3$, 0<x<2, 0<y<3), lithium aluminum titanium phosphate($Li_xAl_yTi_z(PO_4)_3$, 0<x<2, 0<y<1, 0<z<3), $(LiAlTiP)_xO_y$-based glass(0<x<4, 0<y<13) such as $14Li_2O\text{-}9Al_2O_3\text{-}38TiO_2\text{-}39P_2O_5$, lithium lanthanum titanate ($Li_xLa_yTiO_3$, 0<x<2, 0<y<3), lithium germanium thiophosphate($Li_xGe_yP_zS_w$, 0<x<4, 0<y<1, 0<z<1, 0<w<5) such as $Li_{3.25}Ge_{0.25}P_{0.75}S_4$, lithium nitride ($Li_xN_y$, 0<x<4, 0<y<2) such as $Li_3N$, $SiS_2$-based glass ($Li_xSi_yS_z$, 0<x<3, 0<y<2, 0<z<4) such as $Li_3PO_4\text{-}Li_2S\text{-}SiS_2$, $P_2S_5$-based glass($Li_xP_yS_z$, 0<x<3, 0<y<3, 0<z<7) such as $LiI\text{-}Li_2S\text{-}P_2S_5$, or a mixture thereof, but not limited hereto.

Further, examples of the inorganic particles having a dielectric constant of 1 or more may be $SrTiO_3$, $SnO_2$, $CeO_2$, MgO, NiO, CaO, ZnO, $ZrO_2$, $Y_2O_3$, $Al_2O_3$, $TiO_2$, SiC or a mixture thereof, but not limited hereto.

The thermally conductive inorganic particles are materials that provides low thermal resistance but does not provide electrical conductivity and thus has insulating properties, and an example thereof may be at least one selected from the group consisting of aluminum nitride(AlN), boron nitride(BN), alumina($Al_2O_3$), silicon carbide(SiC), and beryllium oxide(BeO), but not limited thereto.

When the above-mentioned high-dielectric constant inorganic particles, inorganic particles having piezoelectricity, thermally conductive inorganic particles, and inorganic particles having lithium ion transferring capability are used in combination, synergistic effects of these can be doubled.

The size of the inorganic particle is not limited, but to ensure appropriate porosity between the inorganic particles, the preferable size is within the range of 0.001 to 10 $\mu$m if possible. When the size is less than 0.001 $\mu$m, dispersion is deteriorated, and physical properties are difficult to adjust. When the size is greater than 10 $\mu$m, a thickness increases, and mechanical property is deteriorated. Further, because of an excessively large pore size, the role of a coating layer is not sufficiently performed, and possibility in which internal short circuit occurs at charging and discharging of the battery is increased.

The content of the inorganic particles is not particularly limited, but is preferably in the range of 1 to 99% by weight, especially 10 to 95% by weight, based on 100% by weight of the mixture of the inorganic particles and the binding material. If the content of the inorganic particles is less than 1% by weight, the content of the binding material may be too high so that the pore size and porosity are reduced due to a decrease in the empty space formed between inorganic particles, thereby reducing the mobility of lithium ions. On the other hand, when the content exceeds 99% by weight, the content of the binding material is too small, so the adhesive force between inorganic materials becomes weak and thus the mechanical properties of the coating layer are deteriorated.

Meanwhile, the binding material is not limited as long as it does not cause a side reaction with the electrolyte solution, but in particular, a binding material with a glass transition temperature(Tg) as low as possible can be used, and the temperature is preferably in the range of -200 to 200°C. This is because the mechanical properties of the final insulating film can be improved.

Further, the binding material does not necessarily have to have ion conduction ability, but it is more preferable to use a polymer having ion conduction ability.

Therefore, the binding material preferably has a high dielectric constant if possible. Actually, since the degree of dissociation of a salt in an electrolyte depends on the dielectric constant of the electrolyte solvent, the higher the dielectric constant of the polymer, the more the degree of salt dissociation in the electrolyte can be improved. The dielectric constant of the polymer may be 1 or more, specifically in the range of 1.0 to 100 (measurement frequency = 1 kHz), and particularly preferably 10 or more.

In addition to the foregoing functions, the binding material may have characteristic which can exhibit a high electrode impregnation (degree of swelling) by gelation when being impregnated into the liquid electrolyte. When the binding material has actually excellent electrode impregnation, the electrolyte injected after the battery is assembled may permeates into the polymer, and the polymer containing the absorbed electrolyte has an electrolyte ion conducting ability. Therefore, if possible, a polymer with a solubility parameter of 15 to 45 $MPa^{1/2}$ is preferred, and the ranges of 15 to 25 $MPa^{1/2}$ and 30 to 45 $MPa^{1/2}$ are more preferred. When the solubility parameter is less than 15 $MPa^{1/2}$ and more than 45 $MPa^{1/2}$, it becomes difficult to be impregnated (swelled) by a typical liquid electrolyte for batteries.

Examples of the binding material include at least one selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose and polyvinylalcohol.

The total thickness of the separator may be 5 micrometers to 20 micrometers, specifically 5 micrometers to 15 micrometers, and more specifically 6 micrometers to 13 micrometers. If the thickness of the separator satisfies the above range, it is possible to effectively prevent short circuits between the positive electrode and the negative electrode while minimizing the resistance value of the lithium secondary battery. As a result, it is possible to prevent a decrease in energy density of lithium secondary batteries and improve lifetime characteristics.

The electrolyte may be a lithium non-aqueous electrolyte, and the lithium non-aqueous electrolyte may include a lithium salt and a non-aqueous organic solvent.

In this case, the lithium salt is used as a medium for transferring ions within a lithium secondary battery. For example, the lithium salt may include $Li^+$ as a cation, and may include at least one selected from the group consisting of $F^-$, $Cl^-$, $Br^-$, $I^-$, $NO_3^-$, $N(CN)_2^-$, $BF_4^-$, $ClO_4^-$, $B_{10}Cl_{10}^-$, $AlCl_4^-$, $AlO_2^-$, $PF_6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$ and $SCN^-$ as an anion.

Specifically, the lithium salt may include a single material selected from the group consisting of LiCl, LiBr, LiI, $LiBF_4$, $LiClO_4$, $LiB_{10}Cl_{10}$, $LiAlCl_4$, $LiAlO_2$, $LiPF_6$, $LiCF_3SO_3$, $LiCH_3CO_2$, $LiCF_3CO_2$, $LiAsF_6$, $LiSbF_6$, $LiCH_3SO_3$, LiFSI (lithium bis(fluorosulfonyl) imide, $LiN(SO_2F)_2$), LiBETI(lithium bis(perfluoroethanesulfonyl) imide, $LiN(SO_2CF_2CF_3)_2$ and LiTFSI (lithium bis(trifluoromethanesulfonyl) imide, $LiN(SO_2CF_3)_2$) or a mixture of two or more, but in terms of excellent stability, it is preferable to include $LiN(SO_2CF_3)_2$.

In addition to these, the lithium salt commonly used in an electrolyte of a lithium secondary battery can be used without particular limitation.

The concentration of the lithium salt can be appropriately changed within a generally usable range, but the lithium salt may be included in the electrolyte at a concentration of 0.5 M to 3 M, specifically at a concentration of 1 M to 2.5 M, and more specifically, at a concentration of 1 M to 2 M, in the electrolyte in order to obtain an optimal effect of forming a coating film for preventing corrosion on the electrode surface. When the concentration of the lithium salt satisfies the above range, the effect of improving cycle characteristics during high-temperature storage of the lithium secondary battery is sufficient, and the viscosity of the electrolyte is appropriate, so that electrolyte impregnation can be improved.

The non-aqueous organic solvent is not limited as long as it may minimize decomposition due to an oxidation reaction or the like in the charge/discharge process of the lithium secondary battery, and may exhibit desired characteristics together with an additive. For example, a carbonate-based organic solvent, an ether-based organic solvent, an ester-based organic solvent, and the like may be used alone or in mixture of two or more thereof, and specifically, a carbonate-based organic solvent may be used.

The carbonate-based organic solvent among the organic solvents may include at least one selected from the group consisting of a cyclic carbonate-based organic solvent and a linear carbonate-based organic solvent. Specifically, the cyclic carbonate-based organic solvent may include at least one selected from the group consisting of ethylene carbonate(EC), propylene carbonate (PC), 1,2-butylene carbonate, 2,3-butylene carbonate, 1,2-pentylene carbonate, 2,3-pentylene carbonate, vinylene carbonate, vinylethylene carbonate, and fluoroethylene carbonate(FEC). Specifically, it may include a mixed solvent of ethylene carbonate having a high dielectric constant and propylene carbonate having a relatively low melting point compared to ethylene carbonate.

Further, the linear carbonate-based organic solvent is a solvent having low viscosity and low dielectric constant, and may include at least one selected from the group consisting of dimethyl carbonate(DMC), diethyl carbonate(DEC), dipropyl carbonate, ethyl methyl carbonate(EMC), methylpropyl carbonate, and ethylpropyl carbonate, and, more specifically, it may include dimethyl carbonate.

The ether-based organic solvent may include any one selected from the group consisting of ethylene glycol dimethyl ether, diethyl ether, dipropyl ether, methyl ethyl ether, methyl propyl ether, and ethyl propyl ether, or a mixture of two or more thereof, but is not limited thereto.

The ester-based organic solvent may include at least one selected from the group consisting of a linear ester-based organic solvent and a cyclic ester-based organic solvent.

Specific examples of the linear ester-based organic solvent may include any one selected from the group consisting of methyl acetate, ethyl acetate, propyl acetate, methyl propionate, ethyl propionate, propyl propionate, and butyl propionate, or a mixture of two or more thereof, but are not limited thereto.

Specific examples of the cyclic ester-based organic solvent may include any one selected from the group consisting of γ-butyrolactone, γ-valerolactone, γ-caprolactone, σ-valerolactone, and ε-caprolactone, or a mixture of two or more thereof, but are not limited thereto.

Among the ester-based solvents, since the cyclic carbonate-based compound well dissociates the lithium salt in the electrolyte due to high dielectric constant as a highly viscous organic solvent, the cyclic carbonate-based compound may be preferably used. When the cyclic carbonate-based compound is mixed with the low viscosity, low dielectric constant linear carbonate-based compound, such as dimethyl carbonate and diethyl carbonate in an appropriate ratio, a gel-type electrolyte having high electrical conductivity may be prepared, which may be more preferably used.

Moreover, the lithium non-aqueous electrolyte may further include a functional additive, and the functional additive may be included in order to prevent the negative electrode from causing collapse of a negative electrode in a high power environment, or to further improve the low temperature high rate discharge characteristics, high temperature stability, overcharge prevention, battery expansion suppression effect during high-temperature storage, and the like.

Specifically, as a representative example, the functional additive may include at least one functional additive selected from the group consisting of a sultone-based compound, a sulfite-based compound, a sulfone-based compound, a sulfate-based compound, a halogen-substituted carbonate-based compound, a nitrile-based compound, a cyclic carbonate-based compound, a phosphate-based compound, a borate-based compound, and a lithium salt-based compound.

The sultone-based compound may include at least one compound selected from the group consisting of 1,3-propane sultone(PS), 1,4-butane sultone, ethane sultone, 1,3-propene sultone(PRS), 1,4-butene sultone, and 1-methyl-1,3-propene sultone, and may be included in an amount of 0.3% by weight to 5% by weight, and specifically 1% by weight to 5% by weight based on the total weight of the gel-type electrolyte. In a case in which the amount of the sultone-based compound in the gel-type electrolyte is greater than 5% by weight, an excessively thick layer may be formed on the surface of the electrode to cause an increase in resistance and a degradation of output, and resistance due to the excessive amount of the additive may be increased to degrade output characteristics.

The sulfite-based compound may include at least one compound selected from the group consisting of ethylene sulfite, methylethylene sulfite, ethylethylene sulfite, 4,5-dimethylethylene sulfite, 4,5-diethylethylene sulfite, propylene sulfite, 4,5-dimethylpropylene sulfite, 4,5-diethylpropylene sulfite, 4,6-dimethylpropylene sulfite, 4,6-diethylpropylene sulfite, and 1,3-butylene glycol sulfite, and may be included in an amount of 3% by weight or less based on the total weight of the gel-type electrolyte.

The sulfone-based compound may include at least one compound selected from the group consisting of divinyl sulfone, dimethyl sulfone, diethyl sulfone, methylethyl sulfone, and methylvinyl sulfone, and may be included in an amount of 3% by weight or less based on the total weight of the gel-type electrolyte.

The sulfate-based compound may include ethylene sulfate(Esa), trimethylene sulfate(TMS), or methyl trimethylene sulfate(MTMS), and may be included in an amount of 3% by weight or less based on the total weight of the gel-type electrolyte.

Further, the halogen-substituted carbonate-based compound may include fluoroethylene carbonate(FEC), and may be included in an amount of 5% by weight or less based on the total weight of the gel-type electrolyte. In a case in which the amount of the halogen-substituted carbonate-based compound in the gel-type electrolyte is greater than 5% by weight, the cell swelling performance may be degraded.

Further, the nitrile-based compound may include at least one compound selected from the group consisting of succinonitrile, adiponitrile(Adn), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The cyclic carbonate-based compound may include vinylene carbonate(VC) or vinylethylene carbonate, and may be included in an amount of 3% by weight or less based on the total weight of the gel-type electrolyte. If the content of the cyclic carbonate-based compound in the gel-type electrolyte is greater than 3% by weight, the cell swelling suppression performance may be degraded.

The phosphate-based compound may include at least one compound selected from the group consisting of lithium difluoro(bisoxalato)phosphate, lithium difluorophosphate, tetramethyl trimethylsilyl phosphate, trimethylsilyl phosphite, tris(2,2,2-trifluoroethyl)phosphate, and tris(2,2,2-trifluoroethyl)phosphite, and may be included in an amount of 3% by weight or less based on the total weight of the gel-type electrolyte.

The borate-based compound may include lithium oxalyldifluoroborate, and may be included in an amount of 3% by weight or less based on the total weight of the gel-type electrolyte.

The lithium salt-based compound is a compound different from the lithium salt included in the lithium non-aqueous electrolyte. The lithium salt-based compound may include at least one compound selected from the group consisting of $LiPO_2F_2$, LiODFB, LiBOB (lithium bisoxalate borate($LiB(C_2O_4)_2$), and $LiBF_4$, and may be included in an amount of 3% by weight or less based on the total weight of the lithium non-aqueous electrolyte.

Two or more kinds of the functional additives may be mixed, and included in an amount of 20% by weight or less, specifically 0.1% by weight to 10% by weight, based on the total weight of the lithium non-aqueous electrolyte. If the content of the functional additive is greater than 20% by weight, there is a possibility that excessive side reactions in the lithium non-aqueous electrolyte may occur during charge and discharge of the battery. In particular, it is not sufficiently decomposed at high temperatures, and may exist as an unreacted material or in a precipitated state in the lithium non-aqueous electrolyte at room temperature. Thereby, side reactions may occur in which the lifetime or resistance characteristics of the lithium metal battery are reduced.

Hereinafter, the lithium secondary battery according to an embodiment of the present disclosure will be described with reference to Examples in order to demonstrate that it exhibits improved effects.

<Example 1> (primary ball milling-sintering-jaw crushing-secondary ball milling)

The active material raw materials of LiOH, $MnO_2$, and $TiO_2$ were mixed at a molar ratio of 3:1:1 in accordance with the stoichiometric ratio under an Ar atmosphere, and sucrose was added for improving the conductivity so that the content in the final positive electrode active material was 8 wt.% to thereby prepare a mixed powder.

The mixed powder was prepared by placing the active material raw materials and sucrose in a zirconia container, using bimodal zirconia balls (10 mm, 5 mm, large diameter/small diameter weight ratio = 0.1, 1.5 times the weight of the mixed powder), purging with Ar for 1 hour, milling at 350 rpm for 1 hour, resting for 30 minutes, and repeating the primary milling cycle 12 times.

Subsequently, the mixed powder, in which the mixing was completed as described above, was heat-treated using a tube furnace under an Ar atmosphere. The heat treatment was performed at 600°C for 3 hours and then at 900°C for 12 hours at a heating rate of 5°C/min.

When baking was completed in this manner, a lithium compound ($Li_{1.2}Ti_{0.4}Mn_{0.4}O_2$) formed with a carbon coating layer was obtained.

This lithium compound was subjected to jaw crushing (Retsch, BB50, 600 to 1,200 rpm, blade-to-blade spacing of 2 to 30 mm, 4 cycles per one process).

After the jaw crushing was completed, the lithium compound was again placed in a zirconia container, and purged with Ar for 1 hour using bimodal zirconia balls (10 mm, 5 mm, large diameter/small diameter weight ratio = 0.1, 1.5 times the weight of the mixed powder). The secondary ball milling was then performed twice by a process of milling at 300 rpm for 6 hours and then resting for 30 minutes. Thereby, a final lithium compound was obtained.

<Example 2>

After the baking was completed in Example 1, the lithium compound ($Li_{1.2}Ti_{0.4}Mn_{0.4}O_2$) formed with a carbon coating layer was first subjected to the secondary ball milling of Example 1. After the secondary ball milling was completed, the jaw crushing of Example 1 was performed again to obtain a final lithium compound.

<Example 3>

A final lithium compound was obtained in the same manner as in Example 2, except that the number of times of performing jaw crushing was set to eight times (two times per process).

<Example 4>

A final lithium compound was obtained in the same manner as in Example 1, except that in Example 1, the primary ball milling was performed at 600 rpm.

<Example 5>

A final lithium compound was obtained in the same manner as in Example 1, except that in Example 1, the heat treatment was performed at 400°C for 3 hours at a heating rate of 5°C/min, and then performed at 600°C for 12 hours.

<Example 6>

A final lithium compound was obtained in the same manner as in Example 1, except that in Example 1, the secondary ball milling was performed at 600 rpm.

<Comparative Example 1>

In Example 1, neither jaw crushing nor secondary milling was performed, and the final lithium compound after completion of baking was obtained as the final lithium compound.

<Comparative Example 2>

In Example 2, the lithium compound that had undergone only up to the secondary ball milling was obtained as the final lithium compound.

<Experimental Example 1>

The PSD of the final lithium compound powders obtained in Examples 1 to 3 and Comparative Examples 1 to 2 were measured by using Malvern Mastersizer 3000 model PSD particle size analyzer as a powder morphology analyzer, and the results are shown in Table 1 below.

[Table 1]

|  | D10($\mu$m) | D50($\mu$m) | D90($\mu$m) | D90/D10 |
|---|---|---|---|---|
| Example 1 | 0.345 | 1.27 | 5.8 | 16.8 |
| Example 2 | 0.36 | 1.66 | 20.7 | 57.5 |
| Example 3 | 0.34 | 1.52 | 22.8 | 67.1 |
| Example 4 | 0.47 | 1.82 | 8.3 | 17.7 |
| Example 5 | 0.51 | 1.1 | 12.3 | 24.6 |
| Example 6 | 0.42 | 1.34 | 16.4 | 39.1 |
| Comparative Example 1 | 1.33 | 6.42 | 12.9 | 9.7 |
| Comparative Example 2 | 0.625 | 3.85 | 8.04 | 12.9 |

Referring to Table 1, it can be confirmed that the positive electrode active material according to the present disclosure has a larger D90/D10 value.

<Experimental Example 2>

The lithium compounds prepared in Examples 1 to 6 and Comparative Examples 1 and 2 as positive electrode active materials, a conductive material (CNT) and a binder were mixed in a weight ratio of 85:5:10 in an NMP solvent to prepare a positive electrode slurry. This positive electrode slurry was coated in a thickness of 60 micrometers onto one surface of an aluminum current collector (thickness: 12 $\mu$m), followed by drying (130°C) and rolling (porosity: 30 vol.%) to manufacture a positive electrode.

A lithium metal foil was used as the negative electrode, and a separator (polyethylene) was interposed between the positive electrode and the negative electrode to prepare an electrode assembly, and an electrolyte prepared by dissolving $LiPF_6$ at 1.0 M in a non-aqueous organic solvent having a composition of ethylene carbonate (EC): ethyl methyl carbonate (EMC) = 50:50 (volume ratio) was injected into the electrode assembly to produce a half-cell.

The half-cell was charged with a constant current of 0.1C at 25°C until the voltage reached 4.65V, and discharged with a constant current of 0.1C until the voltage reached 2.0V. The initial charge capacity and initial discharge capacity obtained therefrom are shown in Table 2 below, and the ratio of the initial discharge capacity to the initial charge capacity is shown in Table 2 below as the initial efficiency.

In addition, the battery capacity was measured while repeating the charge/discharge cycle 50 times in the range of 2.5~4.45V at 0.1C at 45°C, and the capacity ratio at the 50th cycle relative to the 1st cycle is shown in Table 2 below as the capacity retention.

[Table 2]

|  | Initial charge capacity (mAh/g) | Initial discharge capacity (mAh/g) | Initial efficiency(%) | Capacity retention(%) |
|---|---|---|---|---|
| Example 1 | 332.88 | 257.39 | 77.3 | 71 |
| Example 2 | 340.80 | 274.00 | 80.4 | 78 |
| Example 3 | 336.81 | 264.39 | 78.5 | 73 |
| Example 4 | 330.4 | 254 | 76.9 | 70.8 |
| Example 5 | 330.5 | 250.2 | 75.7 | 69.4 |
| Example 6 | 333.6 | 248.6 | 74.5 | 67.5 |

(continued)

|  | Initial charge capacity (mAh/g) | Initial discharge capacity (mAh/g) | Initial efficiency(%) | Capacity retention(%) |
|---|---|---|---|---|
| Comparative Example 1 | 264.49 | 214.87 | 81.2 | 60 |
| Comparative Example 2 | 316.45 | 240.36 | 76.0 | 64 |

Referring to Table 2, it can be confirmed that lithium secondary batteries using the positive electrode active materials of the present disclosure exhibit more excellent capacity retention than the positive electrode active materials of Comparative Examples.

On the other hand, referring to Examples 1 and 4 to 6, it can be confirmed that when the rpm of the primary ball milling and the secondary ball milling are too high, the capacity retention may decrease, and even when the baking temperature is low, the capacity retention is partially reduced.

This is because when the rpm is too high, partial peeling of the carbon coating layer may occur, and when the baking temperature is too low, the battery may not be sufficiently backed, so that the structural stability of the positive electrode active material may be reduced, and thus, some loss can be seen in the capacity retention.

<Experimental Example 3>

The initial resistance and resistance increase rate of the half-cells produced in Experimental Example 2 were measured, and the results are shown in Table 3.

Specifically, the half-cell was charged with a constant current of 1C at 25°C until the voltage reached 4.4 V, allowed to stand for 10 seconds, and discharged with a constant current of 1C until the voltage reached 2.5V.

The initial voltage was measured using a PNE-0506 charge/discharge equipment (manufacturer: PNE SOLUTION, 5V, 6A), and the resistance values were calculated therefrom.

Next, the initially charged and discharged lithium secondary batteries were charged up to 4.4 V with a constant current of 1C, stored at 60°C for 6 weeks (SOC; state of charge) of 100%), and then discharged again at 2.5 C for 10 seconds at 50% SOC, and the voltage after high-temperature storage was measured.

Voltage was measured using a PNE-0506 charge/discharge equipment (manufacturer: PNE SOLUTION, 5V, 6A). The resistance value was calculated from the voltage after high-temperature storage.

The initial resistance values and the resistance values after high-temperature storage measured above were substituted into the following Equation 1 to calculate the resistance increase rate.

Resistance increase rate after high-temperature storage (%) = [(Resistance after 6 weeks of high-temperature storage / Resistance before high-temperature storage) $\times$ 100)] - 100     [Equation 1]

[Table 3]

|  | Initial resistance (mohm) | Resistance increase rate (%) |
|---|---|---|
| Example 1 | 77.1 | 91 |
| Example 2 | 62.3 | 68 |
| Example 3 | 71.5 | 80 |
| Example 4 | 78.2 | 94 |
| Example 5 | 80.5 | 101 |
| Example 6 | 83.6 | 109 |
| Comparative Example 1 | 107.0 | 157 |
| Comparative Example 2 | 87.7 | 132 |

Referring to Table 3, it can be confirmed that the lithium secondary batteries using the positive electrode active materials of the present disclosure exhibit more excellent resistance characteristics than the positive electrode active materials of Comparative Examples.

Meanwhile, referring to Examples 1 and 4 to 6, it can be confirmed that when the rpm of the primary ball milling and the secondary ball milling is too high, the resistance increase rate due to high-temperature storage is high even when the baking temperature was low.

This is because when the rpm is too high, part of the carbon coating layer may peel off, and when the baking temperature is too low, baking may be insufficient, which may reduce the structural stability of the positive electrode active material, resulting in a partial increase in resistance.

Based on the above disclosure, various applications and modifications can be carried out by those of ordinary skill in the art without deviating from the spirit and scope of the present disclosure.

**[Industrial Applicability]**

The positive electrode active material for a lithium secondary battery according to an embodiment of the present disclosure has the effect of improving overall electrochemical performance, such as capacity, lifetime and output characteristics, through particle size optimization.

**Claims**

1. A positive electrode active material for lithium secondary battery, comprising:

   a lithium compound represented by the following Formula 1, and a carbon coating layer formed on the particle surface of the lithium compound,
   wherein the lithium compound has the form of secondary particles having a structure in which primary particles are aggregated each other, with the average diameter(D50) of the secondary particles being 0.2 to 10 $\mu$m, the average diameter(D50) of the primary particles being 10 to 300 nm, and the ratio of the average diameter(D90)/average diameter(D10) of the secondary particles being 15 to 80:

   $$[\text{Formula 1}] \qquad Li_{1+a}M1_bM2_cO_{2-d}X_d$$

   wherein, in Formula 1,
   M1 is one or more selected from the group consisting of Ni, V, Mn, Mo, Cr, and Fe, and M2 is one or more selected from the group consisting of Ti, Zr, Nb, Mo, Ta, and W,
   $0.1 \leq a \leq 0.5$, $0.2 \leq b \leq 0.6$, $0.2 \leq c \leq 0.6$, $1.05 \leq (1+a)/(b+c) \leq 1.5$, $0 \leq d \leq 0.2$, and
   X is a halogen element.

2. The positive electrode active material according to claim 1,
   wherein $b+c=0.8$ in Formula 1.

3. The positive electrode active material according to claim 1,
   wherein the carbon coating layer is included in an amount of 1 to 10 parts by weight based on 100 parts by weight of the lithium compound.

4. A method for preparing the positive electrode active material for lithium secondary battery as set forth in claim 1, the method comprising:

   synthesizing the lithium compound based on a mixture containing an active material precursor and a carbon precursor,
   wherein the synthesis comprises primary ball-milling, baking, secondary ball-milling, and jaw crushing.

5. The method for preparing the positive electrode active material according to claim 4,
   wherein the synthesis is performed in the order of primary ball-milling, baking, jaw crushing and secondary ball-milling.

6. The method for preparing the positive electrode active material according to claim 4,
   wherein the synthesis is performed in the order of primary ball-milling, baking, secondary ball-milling and jaw crushing.

7. The method for preparing the positive electrode active material according to any one of claims 4 to 6,
   wherein the ball-milling is performed under an inert atmosphere.

8. The method for preparing the positive electrode active material according to any one of claims 4 to 6,

wherein the primary ball-milling is performed at 100 rpm to 500 rpm, and the second ball-milling is performed at 100 rpm to 500 rpm.

9. The method for preparing the positive electrode active material according to any one of claims 4 to 6,

   wherein the primary ball-milling is repeatedly performed 1 to 2 times by a process of milling for 3 to 8 hours and then resting for 5 to 120 minutes, and
   the secondary ball milling is repeatedly performed 1 to 2 times by a process of milling for 1 to 8 hours and then resting for 5 to 120 minutes.

10. The method for preparing the positive electrode active material according to any one of claims 4 to 6,
    wherein the jaw crushing is performed once or twice.

11. The method for preparing the positive electrode active material according to any one of claims 4 to 6,
    wherein the jaw crushing is performed at 600 rpm to 1200 rpm.

12. The method for preparing the positive electrode active material according to claim 4,
    wherein the baking is performed under an inert atmosphere at a temperature ranging from 650 to 1200°C for 6 to 30 hours.

13. The method for preparing the positive electrode active material according to claim 4,
    wherein the active material precursor is an M1 source, an M2 source, and a lithium source.

14. The method for preparing the positive electrode active material according to claim 4,
    wherein the carbon precursor is one or more selected from the group consisting of citric acid and sucrose.

15. A positive electrode for lithium secondary battery, having a positive electrode mixture layer formed on one surface or both surfaces of the entire positive electrode,
    wherein the positive electrode mixture layer comprises the positive electrode active material as set forth in claim 1, a binder, and a conductive material.

16. The positive electrode according to claim 15,
    wherein the conductive material is a dot-type conductive material.

17. A lithium secondary battery comprising the positive electrode as set forth in claim 15.

## INTERNATIONAL SEARCH REPORT

| International application No. |
|---|
| **PCT/KR2025/011828** |

| A. | CLASSIFICATION OF SUBJECT MATTER |
|---|---|

**H01M 4/36**(2006.01)i; **H01M 4/525**(2010.01)i; **C01G 53/50**(2025.01)i; **H01M 4/131**(2010.01)i; **H01M 10/052**(2010.01)i; **H01M 4/485**(2010.01)i; **H01M 4/505**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/36(2006.01); C01G 53/00(2006.01); H01M 10/052(2010.01); H01M 10/0562(2010.01); H01M 4/505(2010.01); H01M 4/525(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 리튬 화합물(lithium compound), 카본 코팅층(carbon coating layer), 양극 활물질 (positive active material), 볼밀링(ball milling), 소성(calcination), 조 크러셔(jaw crusher)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2023-0061170 A (ECOPRO BM CO., LTD. et al.) 08 May 2023 (2023-05-08) paragraphs [0037], [0043]-[0045], [0048], [0053], [0057]-[0060], [0084], [0085], [0090], [0091] | 1-3,15-17 |
| Y | | 4-14 |
| Y | CN 118039829 A (SICHUAN VOCATIONAL AND TECHNICAL COLLEGE) 14 May 2024 (2024-05-14) abstract; paragraph [0066]; claims 2, 6 | 4-14 |
| A | KR 10-2023-0025342 A (SAMSUNG SDI CO., LTD.) 21 February 2023 (2023-02-21) claims 1, 10, 11, 20 | 1-17 |
| A | KR 10-2020-0110027 A (SAMSUNG SDI CO., LTD.) 23 September 2020 (2020-09-23) claims 1, 3, 4, 7, 9, 15, 16 | 1-17 |

☑ Further documents are listed in the continuation of Box C.     ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **30 October 2025** | **30 October 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2025/011828** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2024-0108345 A (POSCO FUTURE M CO., LTD.) 09 July 2024 (2024-07-09)<br>claims 1, 11, 13, 14, 16 | 1-17 |

Form PCT/ISA/210 (second sheet) (July 2022)

**INTERNATIONAL SEARCH REPORT**
Information on patent family members

International application No.

**PCT/KR2025/011828**

| Patent document cited in search report | | | Publication date (day/month/year) | Patent family member(s) | | | Publication date (day/month/year) |
|---|---|---|---|---|---|---|---|
| KR | 10-2023-0061170 | A | 08 May 2023 | KR | 10-2707544 | B1 | 13 September 2024 |
| CN | 118039829 | A | 14 May 2024 | None | | | |
| KR | 10-2023-0025342 | A | 21 February 2023 | CN | 115706217 | A | 17 February 2023 |
| | | | | EP | 4135067 | A1 | 15 February 2023 |
| | | | | JP | 2023-026409 | A | 24 February 2023 |
| | | | | JP | 2024-144617 | A | 11 October 2024 |
| | | | | JP | 7607619 | B2 | 27 December 2024 |
| | | | | KR | 10-2025-0053031 | A | 21 April 2025 |
| | | | | KR | 10-2796388 | B1 | 18 April 2025 |
| | | | | US | 2023-0109315 | A1 | 06 April 2023 |
| KR | 10-2020-0110027 | A | 23 September 2020 | CN | 111697224 | A | 22 September 2020 |
| | | | | CN | 111697224 | B | 21 July 2023 |
| | | | | EP | 3708542 | A1 | 16 September 2020 |
| | | | | KR | 10-2385749 | B1 | 11 April 2022 |
| | | | | US | 11349122 | B2 | 31 May 2022 |
| | | | | US | 2020-0295368 | A1 | 17 September 2020 |
| KR | 10-2024-0108345 | A | 09 July 2024 | CN | 120390988 | A | 29 July 2025 |
| | | | | KR | 10-2024-0102079 | A | 03 July 2024 |
| | | | | KR | 10-2683638 | B1 | 10 July 2024 |
| | | | | WO | 2024-136232 | A1 | 27 June 2024 |

Form PCT/ISA/210 (patent family annex) (July 2022)

**EP 4 760 813 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240104686
- KR 1020250107390